# EUROPEAN PATENT APPLICATION

(11) **EP 3 089 241 A1**
(43) Date of publication of application: **02.11.2016**
(21) Application number: 15020142.4
(22) Date of filing: 24.08.2015
(51) Int. Cl.: H01M 4/04, H01M 8/18

(54) **FLOW-ASSIST-FREE ZN/NIOOH BATTERY**

(30) Priority: 02.04.2015 KZ 20150471
(71) Applicant: Institute of Batteries, LLC, 010000 Astana (KZ)
(72) Inventor: Bakenov, Zhumabay, 010000 Astana (KZ); Hara, Toru, 010000 Astana (KZ); Zhang, Yonguang, 021804 the village Koschy (KZ); Kurmanbayeva, Indira, 021804 the village Koschy (KZ); Mentbayeva, Almagul, 010000 Astana (KZ); Konarov, Aishuak, 021804 the village Koschy (KZ); Bakenova, Zagipa, 010000 Astana (KZ)
(74) Representative: Koudine, Andreï

(57) **Abstract**

The invention relates to a flow-assist-free Zn/NiOOH battery comprising a housing, an anode, a cathode, an electrolyte.

According to the invention, the flow-assist-free Zn/NiOOH battery comprises:
• a first carbon-based porous current collector (1) having an electrodeposited thereon anode material, comprising zinc, thereby forming the porous anode,
• an electropolymerized zinc whisker crystals growth suppressor conformally coated onto the porous anode,
• a second carbon-based porous current collector (2) having an electrodeposited thereon cathode material, comprising NiOOH, thereby forming the porous cathode,
• a separator (3) and
• an aqueous electrolyte solution of KOH and ZnO.

## Description

The invention relates to the batteries, particularly, to the flow-assist-free Zn/NiOOH battery.

There is a known invention, closest to the technical nature of the proposed technical solution and comprising: a housing, a cathode, an anode, an electrolyte. (Japan Patent Application, JP2010073533A, 2010). However, this invention has a critical drawback that limits its use: during work can be formed dendrites of anode material, which may cause a short circuit of the battery and stop its operation.

There is a known so-called "flow Zn/Ni battery" comprising: a battery housing, a zinc anode and a NiOOH cathode placed into the battery housing, a KOH aqueous electrolyte solution containing within the battery housing; and a device for circulating the electrolyte between the anode and the cathode (International Patent Application, WO2011047105A1, 2009). This flow battery shows over 5000 cycles of operation since a circulation of the electrolyte prevents the short circuit as a result of Zn whisker crystals growth, which was a disadvantage of Zn/NiOOH batteries. However, in this technology uses a tank for the electrolyte and its circulation system, which causes additional operational costs.

Lithium-ion batteries (in abbreviated form LIB), which have become the most common batteries employed in a large variety of portable electronic devices, has promoted their use in hybrid electric vehicles (in abbreviated form HEVs) and electric vehicles (in abbreviated form EVs), as well as in energy storage to integrate renewable energy sources to electric grids. Lithium-ion batteries comprise highly flammable non-aqueous electrolyte solutions and lead to the problems of safety in use, which is important factor especially when used in the transport and/or renewable energy sources. In addition, LIB need to be manufactured under inert atmosphere with very low humidity content, resulting in high manufacturing cost. Furthermore, a short cycle life of lithium-ion batteries does not comply with using in smart electric grids.

**The problem of the invention** is to create batteries with a low cost/price, a lasting reliable operation and a long service life.

**The technical result of the invention** is to reduce the cost/price, to improve battery operational performance, in particular, provide high capacity, reliability and increase its service life.

This technical result is achieved due to the fact that a developed flow-assist-free Zn/NiOOH battery includes:
- a first carbon-based porous current collector having an electrodeposited anode material, Zn, thereby forming a porous zinc anode,
- an electropolymerized zinc whisker crystals growth suppressor conformally coated onto the zinc anode,
- a second carbon-based porous current collector with an electrodeposited cathode material, NiOOH, thereby forming a porous cathode, as well as
- a separator and
- an aqueous 9 mol/l KOH with 50 g/l ZnO solution as electrolyte.

The current collector may include carbon fiber paper, carbon fiber cloth, or nano-structured free-standing carbon films. The electrodeposited anode may include zinc efficiently soluble into the water-based electrolyte solution as Zn(OH)₄²⁻ during charge, and Zn(OH)₄²⁻ in the electrolyte solution depositing onto the anode as metallic Zn during discharge. The electrodeposited cathode material may include NiOOH effective to be reversibly reduced to Ni(OH)₂ during discharge, and oxidized to NiOOH during charge.

An integration of renewable energy sources (in abbreviated form RES) into electric grids is one of the key factors for continuous growth of the global economy through "smart industrialization." The main limitation for widespread use of RES is a lack of energy storage systems that fully comply with requirements of the integration of renewable energy sources into the electric grids, mainly due to a high cost of existing systems, their safety and limited service life.

### Short description of the invention

Accordingly, the problem of the present invention is to provide a Zn/NiOOH battery effective for restricting a short circuit between the anode and the cathode without using the circulation of the aqueous electrolyte solution.

To achieve the foregoing objective, and in accordance with the purpose of the present invention, as it is embodied and it is detailed herein, a flow-assist-free Zn/NiOOH battery includes:
- a first carbon-based porous current collector having an electrodeposited thereon anode material, zinc, thereby forming a porous zinc anode,
- an electropolymerized zinc whisker crystals growth suppressor conformally coated onto the zinc anode,
- a second carbon-based porous current collector having an electrodeposited thereon cathode material, NiOOH, thereby forming a porous cathode, as well as
- a separator and
- an aqueous electrolyte solution comprising KOH solution with ZnO.

A controlled morphology of the electrodeposited zinc anode and a formation of zinc whisker crystals growth suppressor can suppress a zinc dendrites growth: since the metal dendrites grow as a result of a stress growth in the metal films, a high nucleation rate and a slow grain growth realized by intermittent electrodeposition method, can mitigate the compressive stress during zinc electrodepositting, and, thus, lead to the suppression of the zinc dendrites growth. The zinc whisker crystals growth suppressor that is directly deposited onto the zinc electrodeposit can also suppress the zinc dendrites growth by a redistribution (homogenization) of dissolved Zn(OH)₄²⁻ near the zinc anode surface. Although it may look like an opposite tactics of flow-assisted battery in which the distribution of Zn(OH)₄²⁻ is always refreshed by circulating electrolyte solution, the basic methods of suppressing of the zinc whisker crystals growth by the homogenization of Zn(OH)₄²⁻ are the same as these of the flow-assisted battery.

### Brief description of the drawings

The accompanying drawings, which are incorporated in and form a part of the specification, illustrate the embodiments of the present invention and, together with the description, serve to explain the principles of the invention.

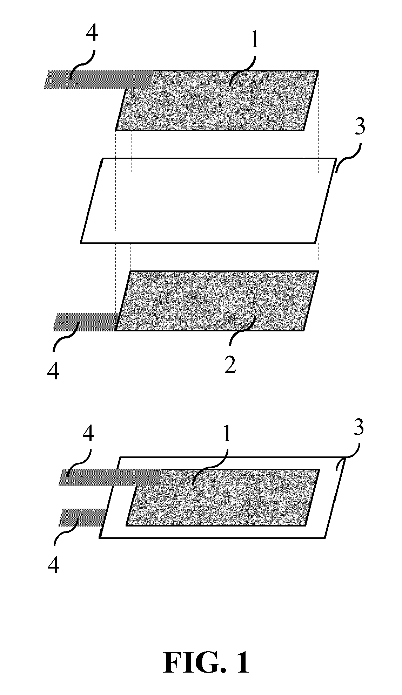

In figure 1 it is shown (in part) a schematic view of a flow-assist-free Zn/NiOOH battery including:
- a carbon-based porous current collector 1 having an electrodeposited thereon anode material, zinc, thereby forming a porous anode,
- a zinc whisker crystals growth suppressor (not shown in figure 1) conformally coated by method of electropolymerization onto the porous zinc anode,
- a second carbon-based porous current collector 2 having an electrodeposited thereon cathode material, NiOOH, thereby forming a porous cathode, as well as
- a separator 3 and
- an aqueous electrolyte solution (not shown in figure 1), as a KOH solution with ZnO, wherein the first and the second carbon-based current collectors 1, 2 of both electrodes are attached respectively to a first and a second nickel tabs/contacts using a nickel paint/adhesive [PELCO® Conductive Nickel Paint (acrylic) or PELCO® High Performance nickel Adhesive (silicate)] or a carbon adhesive paste [PELCO® High Temperature Carbon Paste (silicate)].

### Detailed description of the invention

The invention includes:
- a first carbon-based porous current collector 1 having an electrodeposited thereon anode material, zinc, thereby forming a porous zinc anode,
- a zinc whisker crystals growth suppressor conformally coated by method of electropolymerization onto the zinc anode,
- a second carbon-based porous current collector 2 having an electrodeposited thereon cathode material, NiOOH, thereby forming a porous cathode, as well as
- a separator 3 and
- an aqueous electrolyte solution consisting of 9 mol/l KOH and 50 g/l ZnO solution.

As mentioned earlier, the drawback of Zn/NiOOH rechargeable batteries has been a short-circuit resulting from a zinc dendrites growth. The controlled morphology of electrodeposited zinc anode and the formation of the zinc whisker crystals growth suppressor can suppress the zinc dendrites growth: since the metal dendrites grow as a result of a stress growth in the metal films, a high nucleation rate and a slow grain growth realized by intermittent electrodeposition method, can mitigate the compressive stress during zinc electrodepositting, and, thus, lead to the suppression of the zinc dendrites growth. The zinc whisker crystals growth suppressor that is directly deposited onto the zinc electrodeposit can also suppress the zinc dendrites growth by a redistribution (homogenization) of dissolved Zn(OH)₄²⁻ near the zinc anode surface.

A pulse electrodeposition is conducted in order to control the electrodeposited zinc morphology: in order to reach a certain level of discharge, an applied voltage is periodically turned off to allow a discharge of a formed double electric layer. This process considerably facilitates transport of the ions through the double electric layer to the substrate. Thereby, the pulse electrodeposition can be realized under a higher intensity of the current without causing secondary reactions such as gaseous H₂ and O₂ generation, that take place during conventional non-pulse methods of the electrodeposition. A current density and an applied voltage are determined considering of specimen-sizes and current-limits of power-source modules for electrodeposition. Within the present invention, current on-times of 1 millisecond to 100 milliseconds and current off-times of 1-100 milliseconds are adopted.

The electrodeposition is a non-equilibrium process that is accompanied by an overpotential. The overpotential is a difference between an equilibrium potential and its operating potential when the current is going through. The overpotential is observed because an additional energy is needed for forcing the electrode reaction under a given rate. The overpotential can be utilized for a morphology control. A microstructure of the electrodeposit tends to be finer when the current density increases: this is due to increasing of the cathodic overpotential on the electrodeposit with increasing of the current density. The nucleation rate on the electrodeposit is exponentially proportional to the cathodic overpotential. A large cathodic overpotential reduces the energy of nucleus formation, and therefore increases the nucleus densities, i.e. a number of nucleus per surface area.

Further, a detailed description of the invention is represented, examples of which are illustrated in the accompanying figures. Similar structures and/or compositions will be identified on the figures using identical reference characters. In figure 1 it is shown (in part) a flow-assist-free battery consisting of:
- a first carbon-based porous current collector 1 having an electrodeposited zinc (anode) and a zinc whisker crystals growth suppressor (not shown in figure 1) conformally coated onto the zinc anode;
- a second carbon-based porous current collector 2 having an electrodeposited NiOOH (cathode);
- a separator 3 and
- an aqueous electrolyte solution (not shown in figure 1) comprising 9 mol/l solution of KOH with 50 g/l of ZnO;
- a first and a second nickel tabs 4 respectively connected with the first and the second carbon-based porous current collectors 1, 2 of both electrodes (the anode and the cathode) using a nickel adhesive/paint [PELCO® Conductive Nickel Paint (acrylic) or PELCO® High Performance nickel Adhesive (silicate)] or a carbon adhesive paste [PELCO® High Temperature Carbon Paste (silicate)].

The carbon-based porous current collector (i.e. each porous current collector among the first porous current collector 1 and the second porous current collector 2) used in points 1 and 2 in figure 1, consists of carbon fiber paper, carbon fiber cloth, or nanostructured free-standing carbon films. The porous anode (formed on the first porous current collector 1, as shown in figure 1) comprising electrodeposited zinc, is efficiently soluble into the water-based electrolyte solution as Zn(OH)₄²⁻ during charge, and Zn(OH)₄²⁻ in the electrolyte solution is deposited onto the anode surface as metal zinc during the discharge. The zinc whisker crystals growth suppressor (conformally coated onto the porous anode which is formed on the first porous current collector 1, as shown in figure 1) may comprise polyglycidal methacrylate (in abbreviated form PGYM), polyacrylonitrile-methyl acrylate (in abbreviated form PAN-MA), and/or SiO₂. The cathode material (formed on the second porous current collector 2, as shown in figure 1) may comprise NiOOH which is effectively reduced to Ni(OH)₂ during discharge and is reversibly oxidized to NiOOH during charge. The separator 3 in figure 1 may consist of Absorptive Glass Mat (in abbreviated form AGM) (Nippon Sheet Glass Co., Ltd.). The first and the second tabs 4 in figure 1 are made from nickel.

The size of the electrodeposited zinc anode particles which is controlled by the employed deposition parameters, can be varied from 10 nanometers to 10 micrometers, more preferably approximately between 10 nanometers and 1 micrometer. The control of the zinc anode particle size is useful because it allows a cycle performance of the anode material to be optimized, and provides another method for matching the electrochemical capacity of the anode material with the electrochemical capacity of the cathode material.

A thickness of the electrodeposited zinc whisker crystals growth suppressor (an under-layer) can be varied from 1 nanometer to 1 micrometer, more preferably between approximately between 10 nanometers and 100 nanometers. A sol-gel deposited whisker crystals growth suppressor (an over-layer) may be deposited onto the electrodeposited whisker crystals growth suppressor (the under-layer) in order to improve the mechanical strength of the suppressor.

The size of the electrodeposited NiOOH cathode particles which is controlled by the employed deposition parameters, can be varied from 100 nanometers to 10 micrometers. The control of the particle-size is useful because it provides another method for matching the electrochemical capacity of the cathode material with the electrochemical capacity of the anode material.

### Example

### Porous Anode Preparation:

### Zinc deposit:

Firstly, it is described a direct electrodeposition of crystalline zinc from aqueous solution onto a carbon fiber paper (Toray Carbon Paper, TGP-H-60) at a constant current and an ambient temperature. Zinc was reductively electrodeposited from aqueous solution 0.52 mol/l ZnSO₄·7H₂O, 0.15 mol/l (NH₄)₂SO₄, 0.7 g/l polyacrylamide (in abbreviated form PAA, MW=200,000), 0.05 g/l thiourea. Before starting the electrodeposition, the solution pH was adjusted to 4 by the addition of 40 g/l H₃BO₃. The zinc deposit was obtained by performing the electrodeposition onto the carbon fiber paper under a current on-time of 10 milliseconds, at a current off-time of 10 milliseconds, and under a pulse current density of 1 A/cm² with using a pulse electrodeposition equipment (potentiostat/galvanostat, HP96; pulse generator, DT9834; and software, ASOFT7. Bank Elektronik - Intelligent Controls GmbH). A deposition cell having 2 electrodes was used: this cell consists of a working electrode - a carbon fiber paper, and a second electrode - a zinc plate. The working electrode (i.e. the first collector 1 consisting of the carbon fiber paper) was attached to a first nickel tab 4 using a nickel adhesive/paint [PELCO® Conductive Nickel Paint (acrylic) or PELCO® High Performance nickel Adhesive (silicate)] or a carbon paste adhesive [PELCO® High Temperature Carbon Paste (silicate)]. The first nickel tab 4 was used to make an electrical connection with the working electrode for the deposition of zinc. The time of the deposition was varied to control the diameter/thickness of the deposited zinc, e.g., from 1 min (the diameter of the deposited zinc is contained in an interval of 100-200 nanometers) to 10 min (the thickness of the deposited zinc is contained in an interval of 1-2 micrometers). After deposition, the specimen was rinsed with a deionized water and annealed during 1 hour at 200 °C in air.

### Zinc whisker crystals growth suppressor preparation:

### Poly(acrylonitrile-methyl acrylate) (in abbreviated form PAN-MA) thin film:

It is described a direct electrodeposition of PAN-MA thin film from dimethylformamide (in abbreviated form DMF) solution onto a carbon-based porous current collector having zinc electrodeposit at a constant potential and an ambient temperature. The PAN-MA thin film was reductively electrodeposited from the DMF solution consisting of 1 mol/l acrylonitrile (in abbreviated form AN), 1 mol/l methyl acrylate (in abbreviated form MA) and 0.5 mol/l tetrabutylammonium chloride (in abbreviated form TBACl). The PAN-MA film was obtained by performing the electrodeposition onto the carbon fiber paper current collector having zinc electrodeposit at the ambient temperature and at the potential of -2.5 Volt under a nitrogen flow by using the same pulse electrodeposition equipment that has been used for the zinc electrodeposition, as described above. The electrodeposition of PAN-MA films can also be conducted in an oxygen- and water-free glove box (<1 ppm of O₂ and H₂O). It was used for the electrodeposition a cell with two electrodes, this cell consisting of a working electrode - a carbon fiber paper with the zinc electrodeposit, and a second electrode - a platinum plate or a platinum mesh. The working electrode (i.e. the porous anode consisting of the carbon fiber paper with the zinc electrodeposit), was attached to a first nickel tab 4 using a nickel adhesive/paint [PELCO® Conductive Nickel Paint (acrylic) or PELCO® High Performance nickel Adhesive (silicate)] or a carbon adhesive paste [PELCO® High Temperature Carbon Paste (silicate)]. The first nickel tab 4 was used to make an electrical connection with the working electrode for the deposition of the PAN-MA thin film. The time of the depositions is self-limited because of the electronic insulating nature of the film.

### The porous SiO₂ thin film:

It is described a direct sol-gel deposition of a porous SiO₂ thin film from aqueous solution at an ambient temperature onto a PAN-MA zinc whisker crystals growth suppressor. Firstly, the first carbon-based porous current collector 1 with the zinc electrodeposit and the PAN-MA zinc whisker crystals growth suppressor (the anode) was immersed into a dopamine solution for 8 hours, followed with being rinsed by de-ionized water. Further, the anode was immersed in the mixture of tetraethoxysilane (in abbreviated form TEOS)/ethanol (50/50 wt. %) for 3 minutes, followed by being quickly rinsed by water/ethanol = 50/50 wt.% mixture and dried under an ambient temperature for more than 5 hours and then in an oven at 150 °C for 1 hour.

### Porous Cathode Preparation:

### NiOOH deposit:

It is described a direct electrodeposition of crystalline NiOOH from an aqueous solution onto a second porous current collector 2 consisting of a carbon fiber paper (Toray Carbon Paper, TGP-H-60) at a constant current and an ambient temperature. NiOOH was oxidatively electrodeposited from aqueous 0.13 mol/l Na(CH₃COO)·3H₂O, 0.13 mol/l NiSO₄, and 0.1 mol/l NaSO₄. The NiOOH deposit was obtained by performing the electrodeposition onto the carbon fiber paper at an ambient temperature, at a current on-time of 10 milliseconds, at a current off-time of 10 milliseconds, and at a pulse current density of 1 mA/cm² by using the same pulse electrodeposition equipment that has been used for the zinc and PAN-MA electrodeposition, as described above.

It was used for the electrodeposition a cell with two electrodes, this cell consisting of a working electrode (i.e. the second porous current collector 2 consisting of the carbon fiber paper) and a second electrode: a platinum plate or a platinum mesh. The working electrode was attached to a second nickel tab 4 using a nickel adhesive/paint [PELCO® Conductive Nickel Paint (acrylic) or PELCO® High Performance nickel Adhesive (silicate)] or a carbon adhesive paste [PELCO® High Temperature Carbon Paste (silicate)]. The second nickel tab 4 was used to make an electrical connection with the working electrode for the deposition of NiOOH. The time of the deposition was varied to control the diameter/thickness of the deposited NiOOH, e.g., from 1 minute (the diameter of the deposited NiOOH is contained in an interval of 100-200 nanometers) to 10 minutes (the thickness of the deposited NiOOH is contained in an interval of 1-2 micrometers).

### Separator

An Absorptive Glass Mat (in abbreviated form AGM) (Nippon Sheet Glass Co., Ltd.) was used as a separator.

### Battery housing

In order to inhibit CO₂ dissolution into the electrolyte solution, the anode/separator/cathode stack (figure 1) was put into a "pouch-like" battery housing (not shown in figure 1). After that the housing was sealed while the edges of the first and the second nickel tabs 4 were exposed outside the housing in order to connect with a battery tester.

Although this invention -the flow-assist-free Zn/NiOOH battery - also needs periodic reconditioning (low-current deep discharge) procedures, which are the programmed charging process to dissolve unwanted zinc whisker crystals, as it is done for the flow-assisted Zn/NiOOH battery, but in contrast with the flow-assisted Zn/NiOOH battery, the additional use of an electrolyte solution reservoir and a circulation mechanism can be omitted.

For a Zn/NiOOH battery, charging is usually terminated by monitoring time under a constant current since overcharging can result in H₂ and O₂ evolution (discharge can be terminated at 1.2 Volt); however, this invention has a possibility to terminate charging while monitoring voltage change by increasing surface areas of the anode and the cathode, leading to the decrease in the electrode/electrolyte interface impedance.

Thus, according to one embodiment, the invention relates to a flow-assist-free Zn/NiOOH battery comprising a housing, an anode, a cathode and an electrolyte. According to the invention, the flow-assist-free Zn/NiOOH battery comprises:
- a first carbon-based porous current collector 1 having an electrodeposited thereon anode material, comprising zinc, thereby forming the porous anode,
- an electropolymerized zinc whisker crystals growth suppressor conformally coated onto the porous anode,
- a second carbon-based porous current collector 2 having an electrodeposited thereon cathode material, comprising NiOOH, thereby forming the porous cathode,
- a separator 3 and
- an aqueous electrolyte solution of KOH and ZnO.

Advantageously, each carbon-based porous current collector among the first and the second carbon-based porous current collectors comprises at least one among the following materials: (a) a carbon fiber paper; (b) a carbon fiber cloth; (c) nano-structured free-standing carbon films.

Advantageously, the anode material electrodeposited onto the first carbon-based porous current collector 1 comprises zinc. In these conditions:
- zinc is soluble into the water-based electrolyte solution as Zn(OH)₄²⁻ during charge of the flow-assist-free Zn/NiOOH battery, and
- Zn(OH)₄²⁻ in the electrolyte solution is deposited onto a first surface of the porous anode as metallic zinc during discharge of the flow-assist-free Zn/NiOOH battery.

Advantageously, the electropolymerized zinc whisker crystals growth suppressor conformally coated onto the porous anode comprises at least one among the following materials: (a) polyglycidal methacrylate; (b) polyacrylonitrile-methyl acrylate; (c) SiO₂.

Advantageously, the cathode material electrodeposited onto the second carbon-based porous current collector 2 comprises NiOOH. In these conditions:
- NiOOH is reduced to Ni(OH)₂ during discharge of the flow-assist-free Zn/NiOOH battery, and
- Ni(OH)₂ is reversibly oxidized to NiOOH during charge of the flow-assist-free Zn/NiOOH battery.

Advantageously, the separator 3 comprises nonwoven glass-fiber cloths soaked into the KOH aqueous solution with ZnO.

Advantageously, each carbon-based porous current collector among the first and the second carbon-based porous current collectors comprises at least one among the following materials: (a) a carbon fiber paper; (b) a carbon fiber cloth; (c) nano-structured free-standing carbon films. In these conditions:
- the anode material, zinc, is reductively and intermittently electrodeposited onto the first carbon-based porous current collector 1,
- current on-times during the zinc electrodeposition are contained in an interval from 1 millisecond to 100 milliseconds, and
- current off-times during the zinc electrodeposition are contained in the interval from 1 millisecond to 100 milliseconds.

Advantageously, the electropolymerized zinc whisker crystals growth suppressor conformally coated onto the porous anode is reductively polymerized onto the porous anode, and/or is deposited via sol-gel methods using silicon alkoxides, such as tetraethyl-orthosilicate.

Advantageously, the cathode material, comprising NiOOH, is oxidatively and intermittently electrodeposited onto the second carbon-based porous current collector 2. In these conditions:
- current on-times during the NiOOH electrodeposition are contained in an interval from 1 millisecond to 100 milliseconds, and
- current off-times during the NiOOH electrodeposition are contained in the interval from 1 millisecond to 100 milliseconds.

According to another embodiment, the invention relates to a method for producing a flow-assist-free Zn/NiOOH battery described above and comprising a housing, an anode, a cathode, an electrolyte. This method for producing comprises following steps:
- an electrodeposition of an anode material, comprising zinc, onto a first surface of a first carbon-based porous current collector 1 forming a porous anode;
- conformal coating of a zinc whisker crystals growth suppressor onto the porous anode;
- an electrodeposition of a cathode material, comprising NiOOH, onto a second surface of a second carbon-based porous current collector 2 forming a porous cathode;
- soaking of a separator 3 into an aqueous electrolyte solution comprising 9 mol/l KOH and 50 g/l ZnO;
- stacking of the porous anode, the separator 3 and the porous cathode one upon the other; and
- putting the stacks into the housing of the Zn/NiOOH battery, each stack comprising the porous anode, the separator 3 and the porous cathode.

## Claims

1. Flow-assist-free Zn/NiOOH battery comprising a housing, an anode, a cathode, an electrolyte, **characterized in that** it comprises:
• a first carbon-based porous current collector (1) having an electrodeposited thereon anode material, comprising zinc, thereby forming the porous anode,
• an electropolymerized zinc whisker crystals growth suppressor conformally coated onto the porous anode,
• a second carbon-based porous current collector (2) having an electrodeposited thereon cathode material, comprising NiOOH, thereby forming the porous cathode,
• a separator (3) and
• an aqueous electrolyte solution of KOH and ZnO.

2. Flow-assist-free Zn/NiOOH battery according to claim 1, **characterized in that** each carbon-based porous current collector among the first and the second carbon-based porous current collectors comprises at least one among the following materials: (a) a carbon fiber paper; (b) a carbon fiber cloth; (c) nano-structured free-standing carbon films.

3. Flow-assist-free Zn/NiOOH battery according to claim 1, **characterized in that** the anode material electrodeposited onto the first carbon-based porous current collector (1) comprises zinc, **in that** zinc is soluble into the water-based electrolyte solution as Zn(OH)₄²⁻ during charge of the flow-assist-free Zn/NiOOH battery, and **in that** Zn(OH)₄²⁻ in the electrolyte solution is deposited onto a first surface of the porous anode as metallic zinc during discharge of the flow-assist-free Zn/NiOOH battery.

4. Flow-assist-free Zn/NiOOH battery according to claim 1, **characterized in that** the electropolymerized zinc whisker crystals growth suppressor conformally coated onto the porous anode comprises at least one among the following materials: (a) polyglycidal methacrylate; (b) polyacrylonitrile-methyl acrylate; (c) SiO₂.

5. Flow-assist-free Zn/NiOOH battery according to claim 1, **characterized in that** the cathode material electrodeposited onto the second carbon-based porous current collector (2) comprises NiOOH, **in that** NiOOH is reduced to Ni(OH)₂ during discharge of the flow-assist-free Zn/NiOOH battery, and **in that** Ni(OH)₂ is reversibly oxidized to NiOOH during charge of the flow-assist-free Zn/NiOOH battery.

6. Flow-assist-free Zn/NiOOH battery according to claim 1, **characterized in that** the separator (3) comprises nonwoven glass-fiber cloths soaked into the KOH aqueous solution with ZnO.

7. Flow-assist-free Zn/NiOOH battery according to claim 3, **characterized in that** each carbon-based porous current collector among the first and the second carbon-based porous current collectors comprises at least one among the following materials: (a) a carbon fiber paper; (b) a carbon fiber cloth; (c) nano-structured free-standing carbon films, **in that** the anode material, zinc, is reductively and intermittently electrodeposited onto the first carbon-based porous current collector (1), **in that** current on-times during the zinc electrodeposition are contained in an interval from 1 millisecond to 100 milliseconds and **in that** current off-times during the zinc electrodeposition are contained in the interval from 1 millisecond to 100 milliseconds.

8. Flow-assist-free Zn/NiOOH battery according to claim 4, **characterized in that** the electropolymerized zinc whisker crystals growth suppressor conformally coated onto the porous anode is reductively polymerized onto the porous anode, and/or is deposited via sol-gel methods using silicon alkoxides.

9. Flow-assist-free Zn/NiOOH battery according to claim 5, **characterized in that** the cathode material, comprising NiOOH, is oxidatively and intermittently electrodeposited onto the second carbon-based porous current collector (2), **in that** current on-times during the NiOOH electrodeposition are contained in an interval from 1 millisecond to 100 milliseconds and **in that** current off-times during the NiOOH electrodeposition are contained in the interval from 1 millisecond to 100 milliseconds.

10. Method for producing a flow-assist-free Zn/NiOOH battery comprising a housing, an anode, a cathode, an electrolyte, **characterized in that** it comprises following steps:
• an electrodeposition of an anode material, comprising zinc, onto a first surface of a first carbon-based porous current collector (1) forming a porous anode;
• conformal coating of a zinc whisker crystals growth suppressor onto the porous anode;
• an electrodeposition of a cathode material, comprising NiOOH, onto a second surface of a second carbon-based porous current collector (2) forming a porous cathode;
• soaking of a separator (3) into an aqueous electrolyte solution comprising 9 mol/l KOH and 50 g/l ZnO;
• stacking of the porous anode, the separator (3) and the porous cathode one upon the other; and
• putting the stacks into the housing of the Zn/NiOOH battery, each stack comprising the porous anode, the separator (3) and the porous cathode.
